# EUROPEAN PATENT APPLICATION

(11) **EP 4 343 665 A1**
(43) Date of publication of application: **27.03.2024**
(21) Application number: 23183030.8
(22) Date of filing: 03.07.2023
(51) Int. Cl.: G06Q 30/0601, G06Q 30/0282

(54) **RULE FORMATION SUPPORT PROGRAM, RULE FORMATION SUPPORT METHOD, AND RULE FORMATION SUPPORT APPARATUS**

(30) Priority: 20.09.2022 JP 2022149505
(71) Applicant: FUJITSU LIMITED, Kawasaki-shi, Kanagawa 211-8588 (JP)
(72) Inventor: ITO, Shunsuke, Kawasaki-shi, Kanagawa, 211-8588 (JP)
(74) Representative: Hoffmann Eitle

(57) **Abstract**

A process includes obtaining, based on history information of transactions by each user, a first tendency that indicates a selection frequency of each attribute in the transactions by a plurality of users and a second tendency that indicates a selection frequency of each attribute in the transactions by a predetermined target user, specifying an attribute that includes a difference equal to or greater than a predetermined value in the selection frequency of each attribute by comparing the first tendency and the second tendency, and when generating data to be used for one of creating and updating a model that corresponds to a rule of an attribute presented to the target user by integrating the first tendency and the second tendency, performing integration by using the second tendency for the specified attribute.

## Description

### FIELD

The embodiment of the present disclosure discussed herein is related to a rule formation support program, a rule formation support method, and a rule formation support apparatus.

### BACKGROUND

Online transactions have been increasing due to evolution and development of web technologies in recent years. In such online transactions, for example, a chatbot or the like is used to provide information related to an attribute desired by a partner such that a user does not have dissatisfaction with an online service due to extension of a transaction time by unnecessary exchange.

As a related art for assisting such transactions, there is a technology in which a request tendency of the partner is analyzed by using history data accumulated for transactions with each user, and a model corresponding to a rule of the information provided to the partner is created. As for the model, there is known a model using a Markov decision process for a problem in which a decision maker makes a decision based on a state up to each time while observing the state for a purpose of minimizing (or maximizing) some kind of objective function.

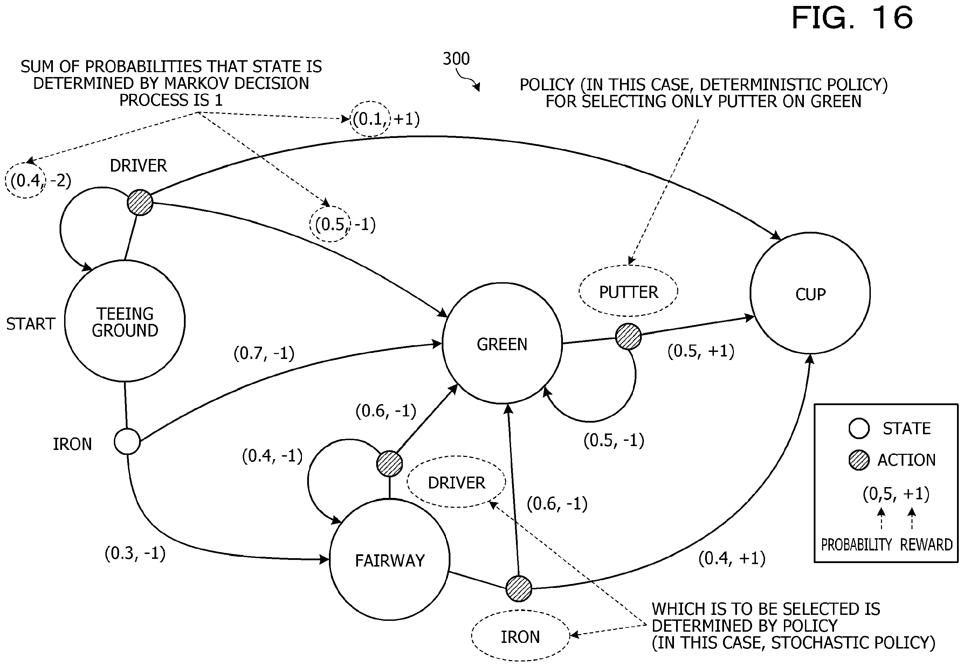

FIG. 16 is an explanatory diagram for describing an example of the model using the Markov decision process. As illustrated in FIG. 16, a model 300 is a model using the Markov decision process in a case where a golf player is a decision maker. The model 300 indicates that actions (shots) using an iron, a driver, a putter, and the like are determined stochastically based on states of a teeing ground, a fairway, a green, a cup, and the like up to each time for a purpose of minimizing a number of strokes of the player.

The model 300 described above may also be applied to a model corresponding to a rule of information provided to the partner to assist a transaction. For example, in a chat consultation or the like, by recommending items frequently asked by a consulter, it is possible to efficiently ask what the consulter wants to ask. For this purpose, an attribute recommendation has to be performed by knowing a tendency of frequently asked questions and taking into account decisions made by the consulter according to the tendency. As for basic algorithms such as Sarsa and Q-learning, there is a training algorithm that updates a value of decision called an action value function. By using such training algorithms in the related art, it is possible to perform the attribute recommendation with respect to the chat consultation or the like by updating the action value in accordance with what kind of tendency exists and what kind of decision is made based on the history data, and by constructing the model 300 in which a profit of an attribute to be recommended is increased.

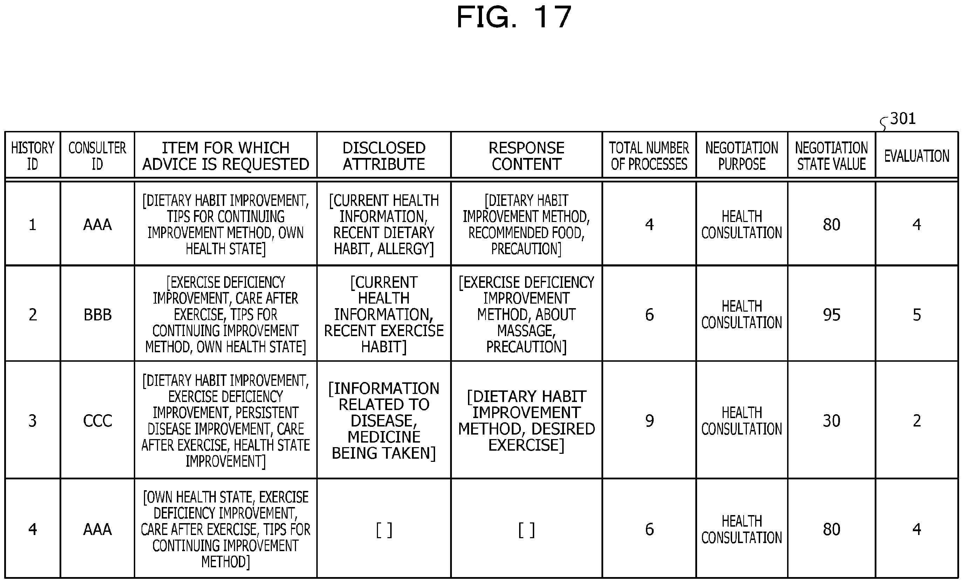

FIG. 17 is an explanatory diagram illustrating an example of the history data. As illustrated in FIG. 17, history data 301 of the chat consultation or the like records, for each consulter, contents of health consultation in an online chat (item for which advice is requested, disclosed attribute, response content, total number of processes, negotiation purpose, negotiation state value, and evaluation). Based on the history data 301, the training algorithms in the related art perform attribute extraction and tendency analysis such as what kind of tendency is in the requested attribute and what the disclosed attribute is.

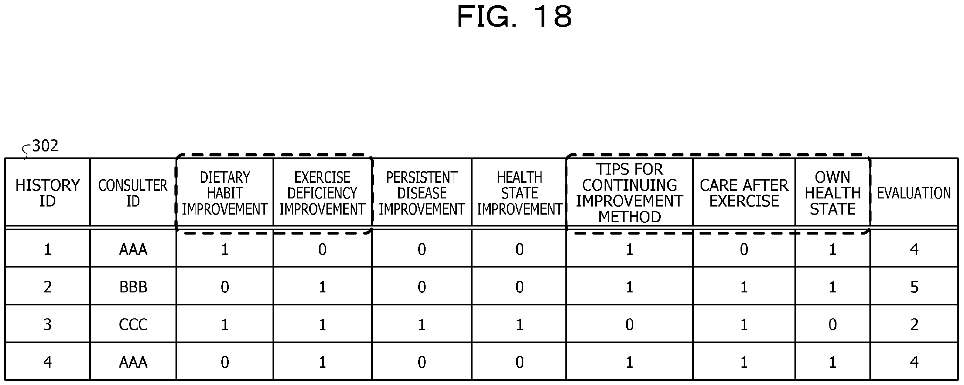

FIG. 18 is an explanatory diagram illustrating an example of the attribute extraction. As illustrated in FIG. 18, in the attribute extraction, an attribute having a high appearance frequency is extracted from the attributes requested by the consulter in the history data 301 and extracted data 302 is created. For example, the extracted data 302 is data obtained by counting a number of appearances of each attribute (dietary habit improvement, exercise deficiency improvement, tips for continuing improvement method, care after exercise, own health state, or the like) requested by the consulter.

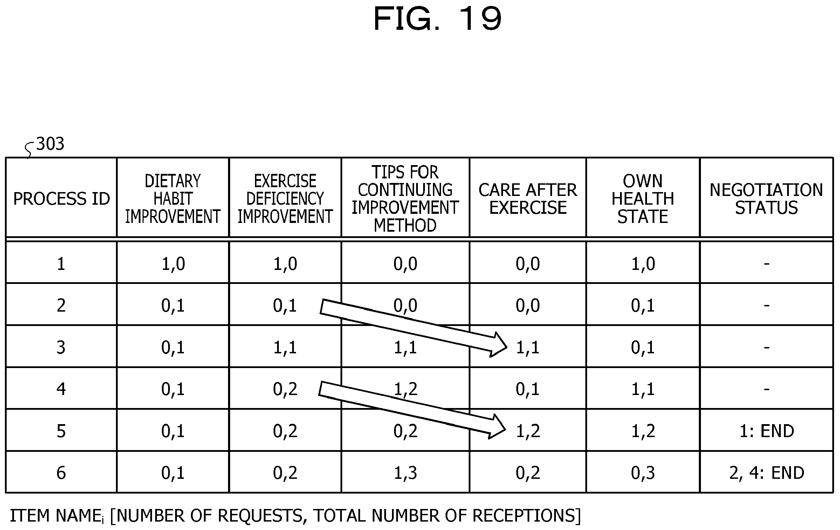

FIG. 19 is an explanatory diagram illustrating an example of the tendency analysis in the related art. As illustrated in FIG. 19, in the tendency analysis in the related art, a dependency relationship between the requested attributes and an appearance tendency of a response content are obtained from history information at a process level of a transaction and tendency data 303 is created. For example, the tendency data 303 is a table in which requests among pieces of process information of transactions having good evaluations included in the history data 301 are summarized as item names {number of requests, total number of receptions}.

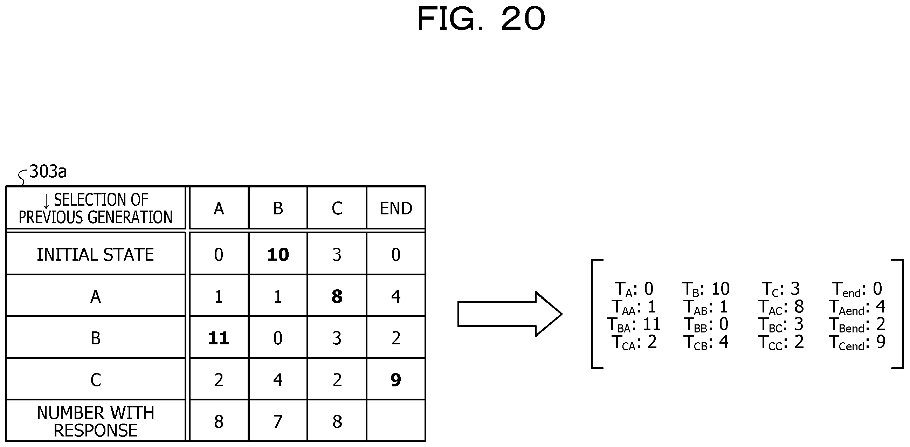

FIG. 20 is an explanatory diagram illustrating an example of matrix representation. As illustrated in FIG. 20, when a number of frequently appearing attributes is N, tendency data 303a that is a table of the request tendencies may be represented as a square matrix of N + 1. Tᵢⱼ (i ∈ {Φ, A, B, C}, j ∈ {A, B, C, end} corresponds to a table in which i is a selection item of a previous generation, and j is an attribute selection. Because a number with a response is not used for updating the request tendency, the description thereof is omitted.

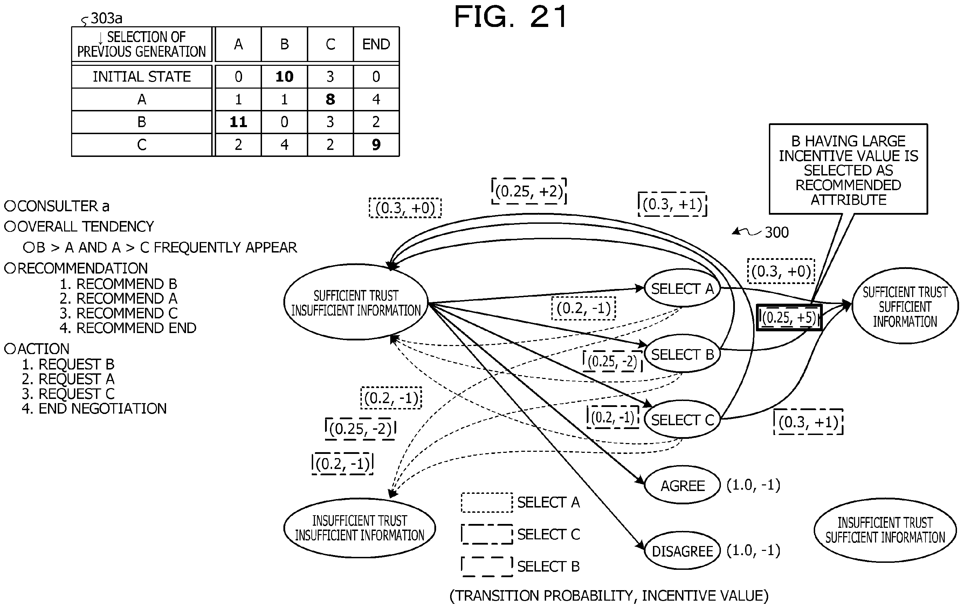

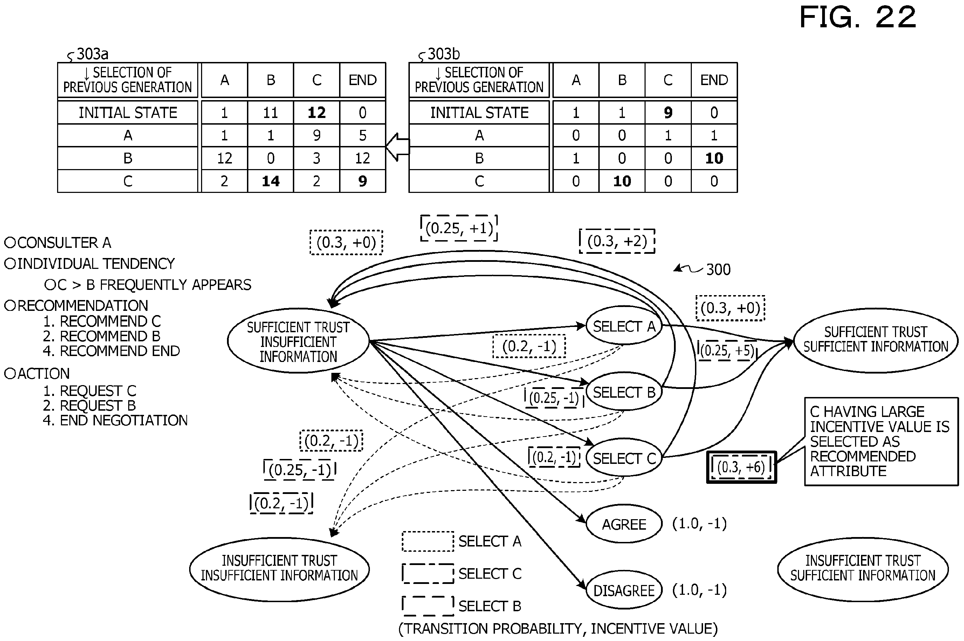

FIGs. 21 and FIG. 22 are explanatory diagrams for describing an example of the model in the related art. As illustrated in FIG. 21, the training algorithm in the related art obtains a model 300 using a Markov decision process in a case where a general user is a decision maker, based on tendency data (general user) 303a created from the history data 301 of all users (also referred to as general users).

For example, it may be seen that the frequency of requesting A next to B and requesting C next to A is high in the tendency data (general user) 303a. As described above, the training algorithm in the related art updates an incentive value for an action from each state in the model 300 by using the request tendency known from the tendency data (general user) 303a, thereby creating the model 300 reflecting the request tendency.

B is recommended (selected) in an initial state in the model 300. After that, when B is requested as recommended, A is recommended (selected) next because an incentive value of A is large

As illustrated in FIG. 22, the training algorithm in the related art combines the tendency data (general user) 303a of the general users and tendency data (target user) 303b of a target individual user (also referred to as a target user) to obtain a model 300 reflecting the tendency of the target user. For example, the training algorithm in the related art creates the model 300 by using a request tendency table obtained by simply adding a request tendency table of the tendency data (target user) 303b to a request tendency table of the tendency data (general user) 303a. By reflecting the tendency of the target user in the model 300 as described above, an incentive value of C is larger than that of B in the initial state, and thus C is recommended (selected).

Japanese Laid-open Patent Publication Nos. 2015-146126 and 2009-169698, and specifications of U.S. Patent Application Publication Nos. 2014/0156395 and 2010/0318544 are disclosed as related art.

However, in the above-described related art, in a case where an amount of information of the general users is enormous with respect to an amount of information of the target user in the history data 301, there is a problem that an influence of the tendency of the target user on the model becomes very small. For this reason, it is difficult to create a rule reflecting the tendency of the target user.

### SUMMARY

In one aspect, an object is to provide a computer-readable recording medium storing a rule formation support program, a rule formation support method, and a rule formation support apparatus capable of creating a rule reflecting a tendency of a specific user.

According to an aspect of the embodiments, a rule formation support program causing a computer to execute a process, the process includes obtaining, based on history information of transactions by each user, a first tendency that indicates a selection frequency of each attribute in the transactions by a plurality of users and a second tendency that indicates a selection frequency of each attribute in the transactions by a predetermined target user, specifying an attribute that includes a difference equal to or greater than a predetermined value in the selection frequency of each attribute by comparing the first tendency and the second tendency, and when generating data to be used for one of creating and updating a model that corresponds to a rule of an attribute presented to the target user by integrating the first tendency and the second tendency, performing integration by using the second tendency for the specified attribute.

### BRIEF DESCRIPTION OF DRAWINGS

FIG. 1 is a block diagram illustrating a functional configuration example of a rule formation support apparatus according to an embodiment;
FIG. 2 is an explanatory diagram illustrating an example of specifying a range from tendency data;
FIG. 3 is an explanatory diagram for describing an example of general and individual tendency comparison;
FIG. 4 is an explanatory diagram for describing an example of generating model creation data by the general and individual tendency comparison;
FIG. 5A is an explanatory diagram for describing generation of model creation data;
FIG. 5B is an explanatory diagram for describing the generation of the model creation data;
FIG. 5C is an explanatory diagram for describing the generation of the model creation data;
FIG. 6 is an explanatory diagram for describing an example of a model trained by the model creation data;
FIG. 7 is a flowchart illustrating an operation example of the rule formation support apparatus according to the embodiment;
FIG. 8 is an explanatory diagram for describing a trust mediation service;
FIG. 9 is an explanatory diagram for describing document forwarding in the trust mediation service;
FIG. 10 is an explanatory diagram for describing a trust mediation service-CLOSS;
FIG. 11 is a block diagram illustrating an application example of the rule formation support apparatus according to the embodiment;
FIG. 12 is an explanatory diagram illustrating an example of integration of attribute tendencies;
FIG. 13 is an explanatory diagram illustrating a specific example of an attribute tendency;
FIG. 14 is an explanatory diagram illustrating a specific example of the attribute tendency;
FIG. 15 is an explanatory diagram for describing an example of a configuration of a computer;
FIG. 16 is an explanatory diagram for describing an example of a model using a Markov decision process;
FIG. 17 is an explanatory diagram illustrating an example of history data;
FIG. 18 is an explanatory diagram illustrating an example of attribute extraction;
FIG. 19 is an explanatory diagram illustrating an example of tendency analysis in the related art;
FIG. 20 is an explanatory diagram illustrating an example of matrix representation;
FIG. 21 is an explanatory diagram for describing an example of a model in the related art; and
FIG. 22 is an explanatory diagram for describing an example of the model in the related art.

### DESCRIPTION OF EMBODIMENTS

Hereinafter, with reference to the drawings, techniques capable to generate a rule reflecting a tendency of a specific user are provided according to an embodiment. In the embodiment, configurations having the same function are denoted by the same reference sign, and redundant description thereof is omitted. The rule formation support program, the rule formation support method, and the rule formation support apparatus described in the embodiment below are merely exemplary and are not intended to limit the embodiment. Portions of the embodiment below may be appropriately combined as long as the portions of the embodiment do not contradict each other.

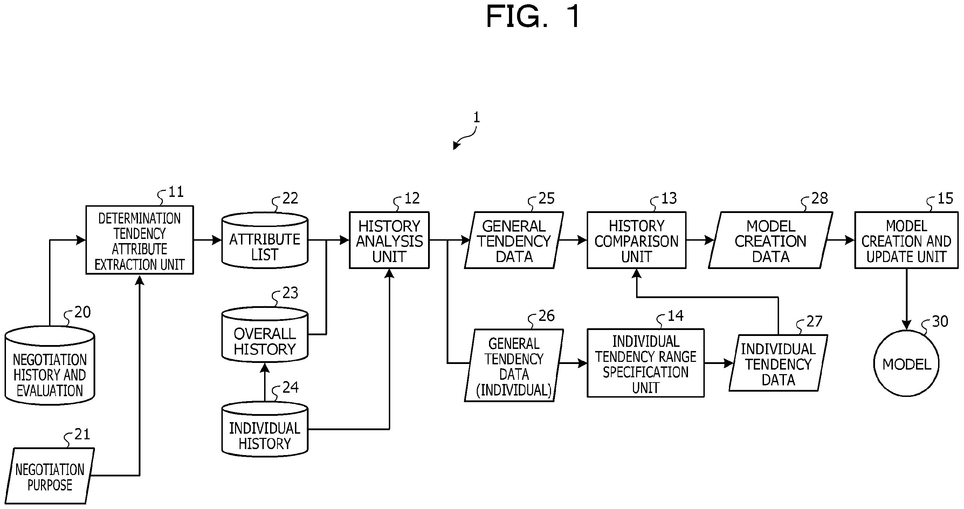

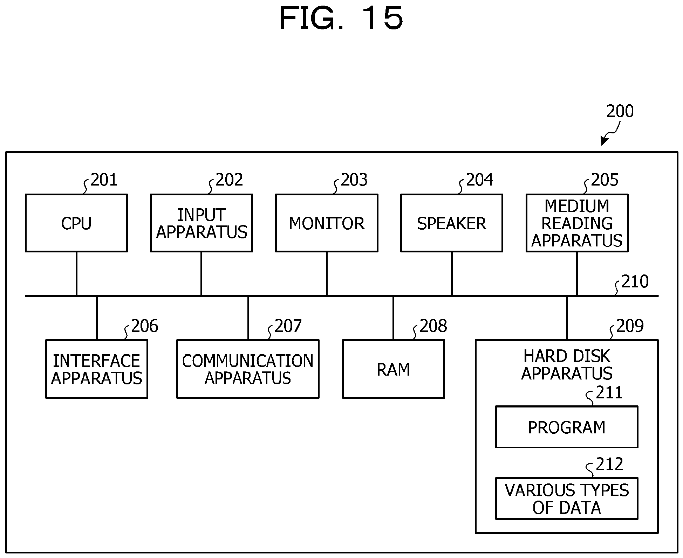

FIG. 1 is a block diagram illustrating a functional configuration example of a rule formation support apparatus according to an embodiment. As illustrated in FIG. 1, a rule formation support apparatus 1 includes a determination tendency attribute extraction unit 11, a history analysis unit 12, a history comparison unit 13, an individual tendency range specification unit 14, and a model creation and update unit 15. For example, a personal computer (PC) or the like may be applied to the rule formation support apparatus 1 (details of a hardware configuration will be described later with reference to FIG. 15).

The determination tendency attribute extraction unit 11 is a processing unit that extracts an attribute to be used as a determination tendency by referring to a negotiation history and evaluation 20 related to a history of transactions and referring to a negotiation purpose 21. For example, the determination tendency attribute extraction unit 11 extracts attributes used at a time of a transaction (negotiation), based on the negotiation purpose 21 and the negotiation history and evaluation 20 such as an attribute requested by each user and a disclosed attribute included in the history data 301 described above. After that, the determination tendency attribute extraction unit 11 outputs the extracted attributes as an attribute list 22.

The history analysis unit 12 is a processing unit that analyzes the history data 301 related to the transactions of each user. For example, the history analysis unit 12 receives an individual history 24 related to a specific target user included in the history data 301, an overall history 23 related to a plurality of users (general users) other than the target user, and the attribute list 22. For example, the individual history 24 is history data related to a specific consulter ID included in the history data 301. The overall history 23 is history data related to consulter IDs other than the specific consulter ID included in the history data 301.

For each attribute in the attribute list 22, the history analysis unit 12 creates general tendency data 25 by counting selection cases of the attribute in the general users indicated in the overall history 23. For example, the general tendency data 25 is data in which the tendency in the general users is represented by the matrix representation described above. For example, the general tendency data 25 is an example of a first tendency that indicates a selection frequency of each attribute in the transactions by the general users.

Similarly, for each attribute in the attribute list 22, the history analysis unit 12 counts selection cases of the attribute in the target user indicated in the individual history 24 and creates general tendency data (individual) 26. For example, the general tendency data (individual) 26 is data in which the tendencies in the target user are represented by the matrix representation described above. For example, the general tendency data (individual) 26 is an example of a second tendency that indicates the selection frequency of each attribute in the transactions by the target user.

The individual tendency range specification unit 14 is a processing unit that specifies a range (tendency range) of the attributes that frequently appear in the target user based on the general tendency data (individual) 26, and creates individual tendency data 27 by cutting out the general tendency data (individual) 26 into a specified range.

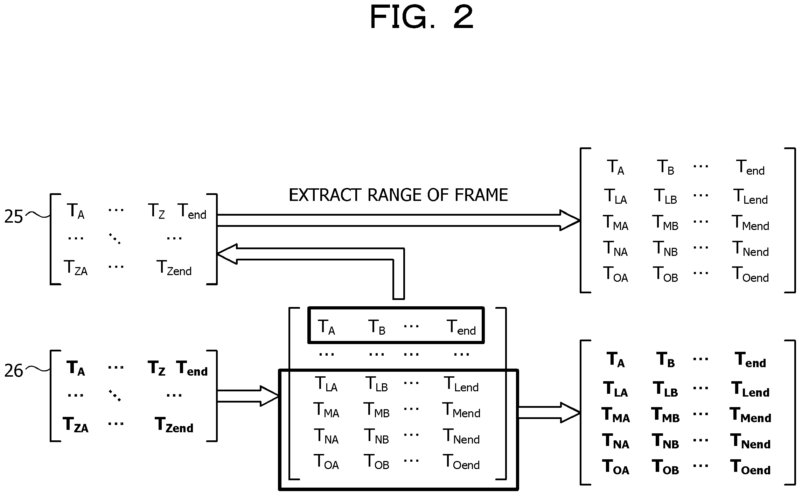

FIG. 2 is an explanatory diagram illustrating an example of specifying the range from tendency data. As illustrated in FIG. 2, there may be a case where there are an enormous amount of histories in the general user and there are a large number of frequently appearing attributes. The individual tendency range specification unit 14 creates the individual tendency data 27 by cutting out the range (a line frame in the drawing) of the attributes that frequently appear (for example, the selection frequency is equal to or greater than a specific threshold) for the target user in the general tendency data (individual) 26.

Accordingly, in the rule formation support apparatus 1, even when there are a large number of frequently appearing attributes in the general tendency data 25, it is possible to compare the individual tendency data 27 within the range of the attributes that frequently appear for the target user with the general tendency data 25, and to suppress the number of targets to be compared from becoming enormous. Although the present embodiment exemplifies a configuration in which the individual tendency data 27 is created from the general tendency data (individual) 26 and then the individual tendency data 27 and the general tendency data 25 are compared with each other, it goes without saying that the general tendency data (individual) 26 and the general tendency data 25 may be directly compared with each other.

The history comparison unit 13 is a processing unit that compares the general tendency data 25 with the individual tendency data 27, integrates the general tendency data 25 and the individual tendency data 27, and creates model creation data 28 to be used for creating or updating a model 30 corresponding to the rule of the attribute presented to the target user. For example, the history comparison unit 13 compares the general tendency data 25 with the individual tendency data 27 and specifies an attribute having a difference equal to or greater than a predetermined value in the selection frequency of each attribute. After that, when the history comparison unit 13 integrates the general tendency data 25 and the individual tendency data 27 to create the model creation data 28, the history comparison unit 13 performs the integration by using the individual tendency data 27 for the attribute specified as the attribute having the difference.

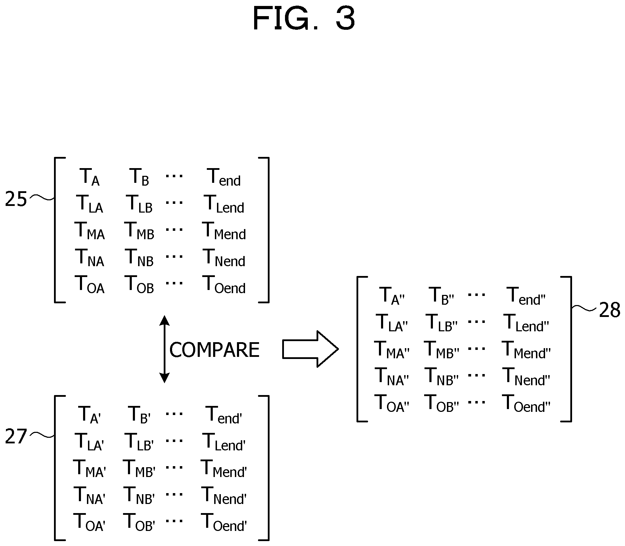

FIG. 3 is an explanatory diagram for describing an example of general and individual tendency comparison. As illustrated in FIG. 3, the history comparison unit 13 compares selection frequencies (for example, T_{A} of the general tendency data 25 and T_{A'} of the individual tendency data 27) of the same attribute in the general tendency data 25 and the individual tendency data 27, and specifies an attribute having a difference equal to or greater than a predetermined value in the selection frequency.

For the general tendency data 25 and the individual tendency data 27, the history comparison unit 13 sets a number of times an attribute n (n ∈ {A, B, ..., Z}) is selected as a maximum value, and normalizes which attribute is likely to be selected after each attribute to a value of [0, 1]. Accordingly, the general tendency data 25 and the individual tendency data 27 are values normalized to the range of [0, 1] instead of the number of appearances indicating the selection tendency in each attribute. The history comparison unit 13 compares the values normalized in this way and specifies an attribute having a difference equal to or greater than a predetermined value. Accordingly, the history comparison unit 13 may perform comparison from a viewpoint of "how much tendency related to attribute selection appears" regardless of a magnitude of a history amount.

After that, the history comparison unit 13 combines the matrices of the general tendency data 25 and the individual tendency data 27 to generate the model creation data 28. The history comparison unit 13 determines that a deviation between the general user and the target user is large for the attribute having the difference equal to or greater than the predetermined value in the selection frequency, and generates the model creation data 28 by using the tendency (matrix value) of the target user.

For example, it is assumed that, for a certain attribute, a difference between a matrix value (Tᵢⱼ) in the general tendency data 25 and a matrix value (T_{ij'}) in the individual tendency data 27 is |Tᵢⱼ - T_{ij'}| > 0.5, and there is a difference equal to or greater than the predetermined value. In this case, the history comparison unit 13 sets a matrix value (T_{ij"}) of the model creation data 28 to T_{ij"} = (Tᵢⱼ + T_{ij'})/2, and performs integration by using the individual tendency data 27. For example, when it is not |Tᵢⱼ - T_{ij'}| > 0.5 and the difference is small, the history comparison unit 13 determines that the deviation between the general user and the target user is small, and generates the model creation data 28 by using only the matrix value (Tᵢⱼ) in the general tendency data 25 without using the matrix value (T_{ij'}) in the individual tendency data 27.

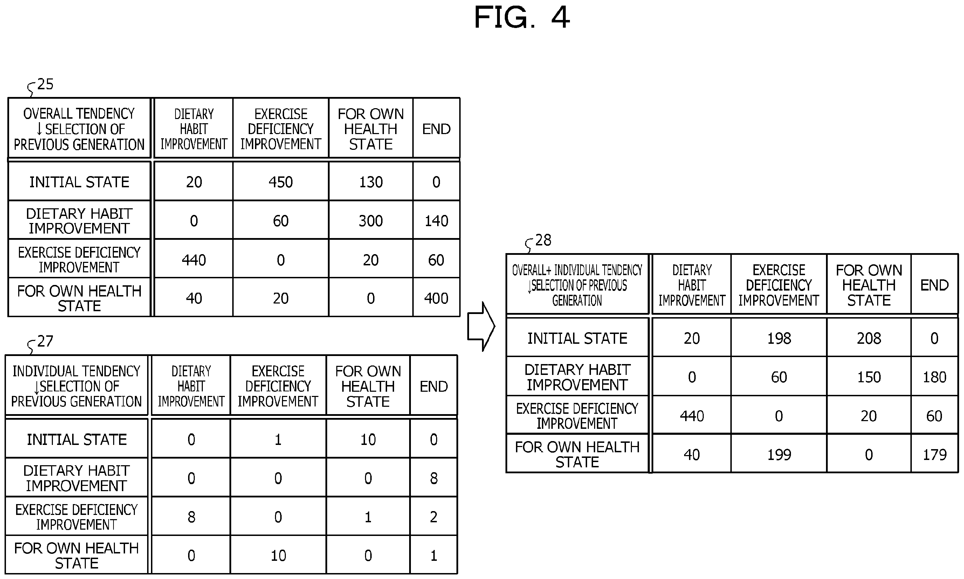

FIG. 4 is an explanatory diagram for describing an example of generating the model creation data by the general and individual tendency comparison. As illustrated in FIG. 4, the history comparison unit 13 compares the general tendency data 25 with the individual tendency data 27, and then integrates the general tendency data 25 and the individual tendency data 27 to generate the model creation data 28. For example, the history comparison unit 13 uses the individual tendency data 27 to correct a value of the attribute having the difference equal to or greater than the predetermined value in the selection frequency when the general tendency data 25 and the individual tendency data 27 are compared with each other such that the individual tendency appears largely, and generates the model creation data 28.

For example, in the general tendency data 25, when attributes having a high frequency are followed, an order of B (exercise deficiency improvement) - A (dietary habit improvement) - C (for own health state) - end is output. By contrast, in the model creation data 28 generated by integrating the general tendency data 25 and the individual tendency data 27, the attributes with high frequency are C (for own health state) - B (exercise deficiency improvement) - A (dietary habit improvement) - end in order, in which individual characteristics are reflected and the overall tendency is used.

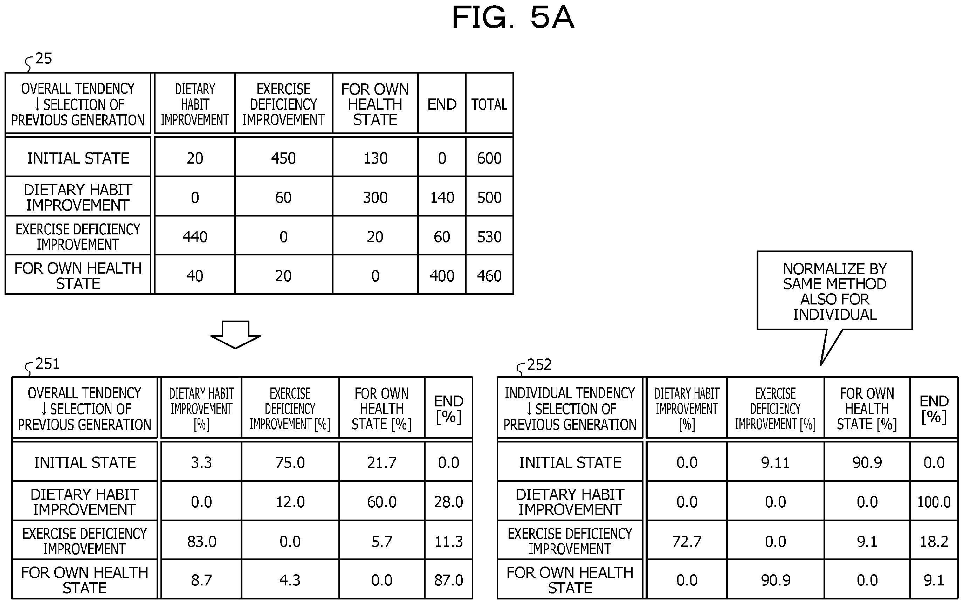

FIGs. 5A to 5C are explanatory diagrams for describing a generation of the model creation data. As illustrated in FIG. 5A, when the history comparison unit 13 compares the general tendency data 25 with the individual tendency data 27 to generate the model creation data 28, the history comparison unit 13 normalizes the general tendency data 25 and the individual tendency data 27 to generate normalized data 251 and normalized data 252.

For example, the history comparison unit 13 generates the normalized data 251 by normalizing (0% to 100% in the illustrated example) the appearance tendency of each attribute based on the number of appearances of each attribute with respect to a total number in the general tendency data 25. Similarly, the history comparison unit 13 generates the normalized data 252 by normalizing (0% to 100% in the illustrated example) the appearance tendency of each attribute based on the number of appearances of each attribute with respect to a total number in the individual tendency data 27.

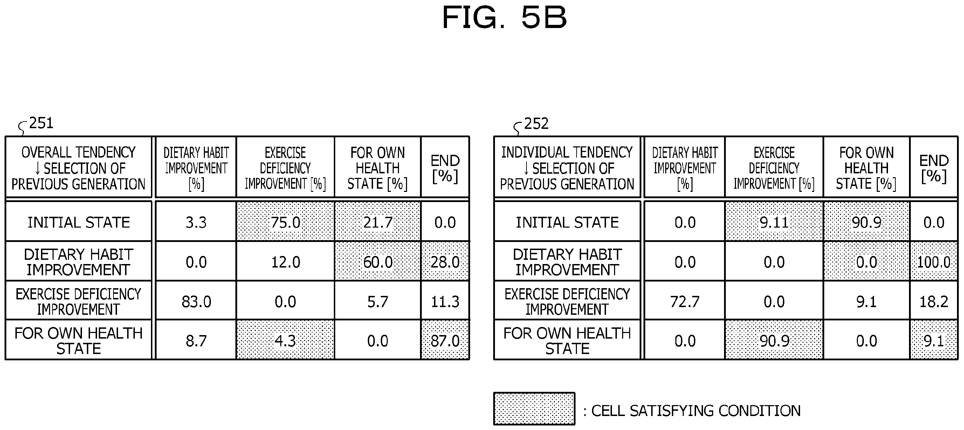

As illustrated in FIG. 5B, the history comparison unit 13 compares cells of the normalized data 251 and 252 with each other, and specifies an attribute (a cell satisfying a condition) having a difference equal to or greater than a predetermined value.

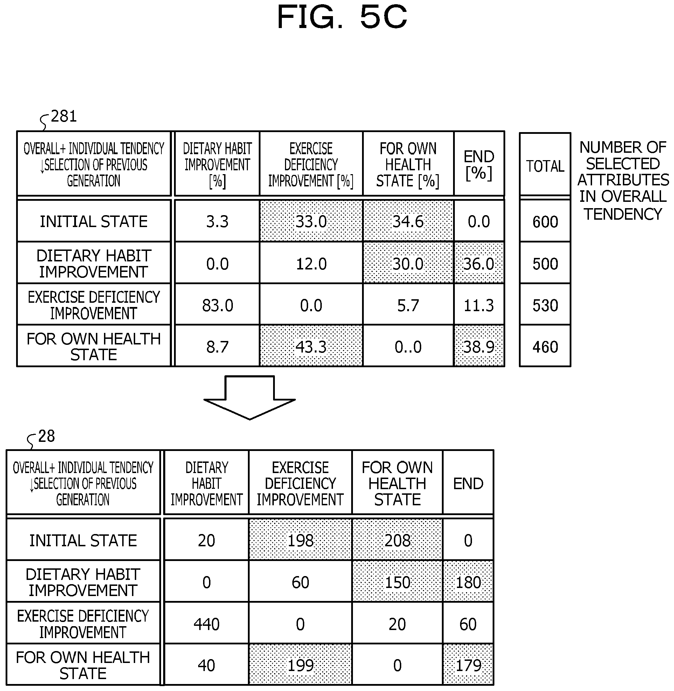

As illustrated in FIG. 5C, for the attribute (a cell satisfying a condition) having the difference equal to or greater than the predetermined value in the normalized data 251, the history comparison unit 13 uses the value of the normalized data 252 to update the value of the normalized data 251, and generates normalized data 281. The history comparison unit 13 multiplies each cell of the normalized data 281 by the number of selected attributes to generate the model creation data 28 in which the normalized value is returned to the number of selected attributes.

Returning to FIG. 1, the model creation and update unit 15 is a processing unit that creates and updates the model 30 based on the model creation data 28. For example, the model creation and update unit 15 applies a known training algorithm such as Sarsa or Q-learning to the model creation data 28 to create and update the model 30 using the Markov decision process described above. For example, based on the model creation data 28, the model creation and update unit 15 updates (generates) an incentive value of an attribute to be recommended (output) for each history (state up to each time) of a transaction in the model 30 using the Markov decision process.

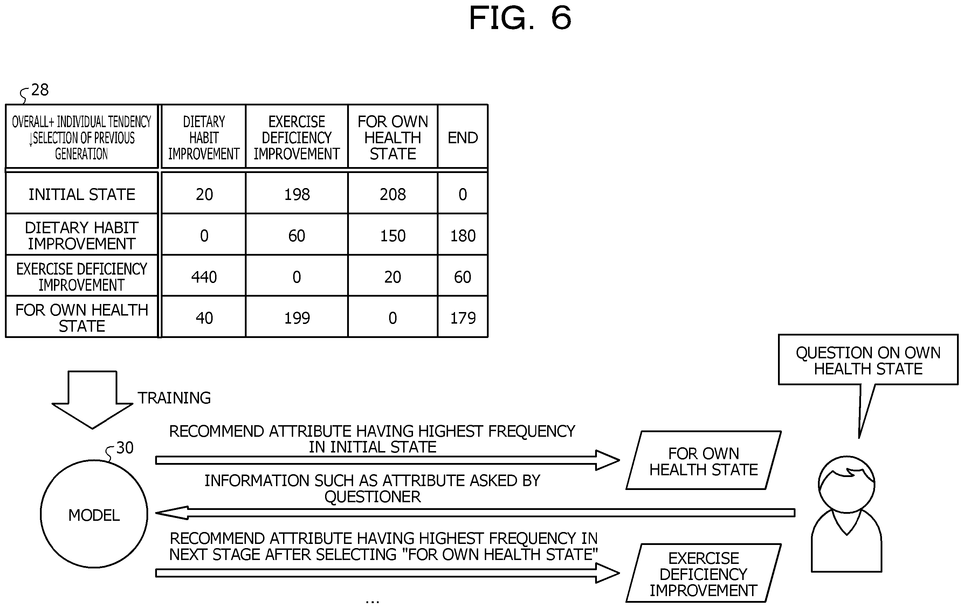

FIG. 6 is an explanatory diagram for describing an example of a model trained by the model creation data. As illustrated in FIG. 6, the model 30 trained by using the known training algorithm such as Sarsa or Q-learning with the model creation data 28 provides an attribute corresponding to each state (an initial state and a response to a question of a questioner). The illustrated example illustrates a case where the model 30 is used for a health consulting chatbot. For example, "for own health state", which is an attribute having a highest frequency (incentive value) is recommended in the initial state. After that, "exercise deficiency improvement", which is an attribute having a highest frequency (incentive value), is recommended in the next stage after "for own health state" is selected.

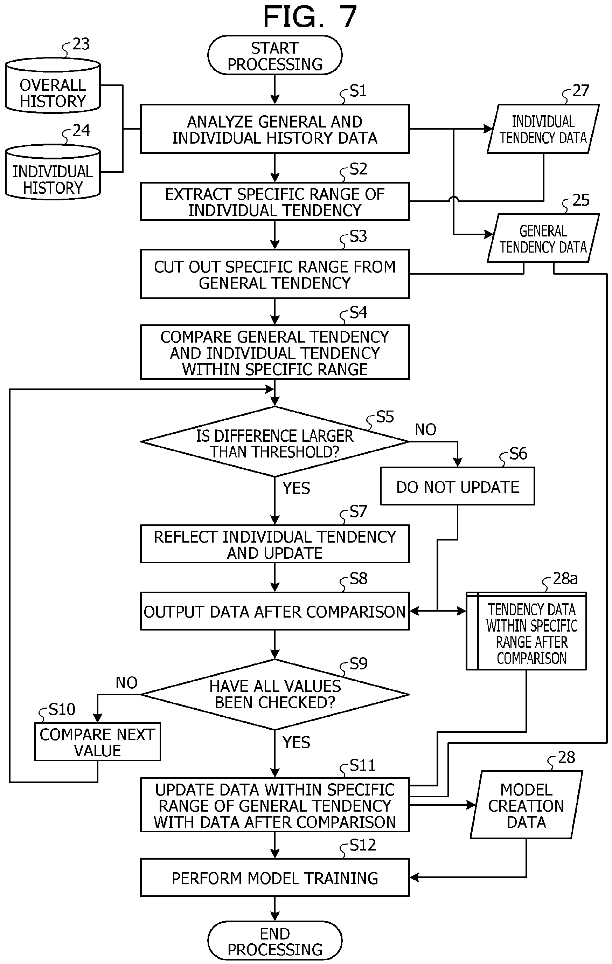

FIG. 7 is a flowchart illustrating an operation example of the rule formation support apparatus according to the embodiment. As illustrated in FIG. 7, when the processing is started, the history analysis unit 12 analyzes the history data (overall history 23 and individual history 24) of the general users and the individual (target user) (S1). As a result, the general tendency data 25 and the individual tendency data 27 are generated.

After that, the individual tendency range specification unit 14 extracts a specification range (range of frequently appearing attributes) of the tendencies of the individual (target user) based on the general tendency data (individual) 26, and obtains the individual tendency data 27 (S2).

After that, the history comparison unit 13 cuts out a specific range corresponding to the individual tendency data 27 from the general tendency data 25 (S3), and compares the general tendency (tendency of the general users) with the individual tendency (tendency of the target user) within the specific range (S4).

After that, the history comparison unit 13 determines whether the difference in the selection frequency in each attribute is larger than a predetermined threshold in the comparison in S4 (S5). For the attribute for which the difference in the selection frequency is not larger than the predetermined threshold (S5: No), the history comparison unit 13 does not update the matrix value of the general tendency data 25 (S6), and the processing proceeds to S8.

For the attribute for which the difference in the selection frequency is larger than the predetermined threshold (S5: Yes), the history comparison unit 13 uses the matrix value of the individual tendency data 27 to update the matrix value of the general tendency data 25 (S7) in order to reflect the individual tendency, and the processing proceeds to S8.

In S8, the history comparison unit 13 outputs the data after the comparison (matrix values of the general tendency data 25) as tendency data 28a within the specific range after comparison, and determines whether all the values have been checked (compared) (S9). When all the values have not been checked (S9: No), the history comparison unit 13 compares the next value within the specific range (S10), and returns the processing to S5.

When all the values have been checked (S9: Yes), the history comparison unit 13 updates (replaces) the data within the specific range of the general tendency data 25 with the tendency data 28a within the specific range after the comparison, and generates the model creation data 28 (S11). After that, the model creation and update unit 15 performs model training related to the creation and update of the model 30 based on the model creation data 28 (S12), and ends the processing.

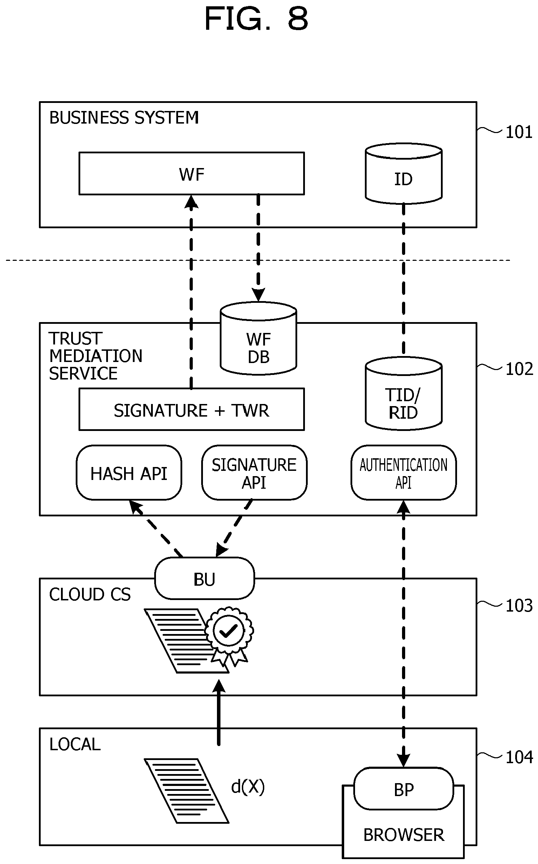

Next, a case where the rule formation support apparatus 1 is applied to a trust mediation service will be described. FIG. 8 is an explanatory diagram for describing the trust mediation service.

As illustrated in FIG. 8, the trust mediation service is a synonym for Trust As A Service (TaaS), and is an example of a service provided by a trust mediation service 102 to an organization (A) including a business system 101, the trust mediation service 102, a cloud CS 103, and a local 104. For example, in the organization (A) including the cloud CS 103, a workflow tool (WF), and individual/organization information (ID), the trust mediation service 102 provides a service for cryptographically guaranteeing authenticity and a forwarding history of document information (d(X)) when a user (X) forwards the document information (d(X)) by using the WF.

For example, the trust mediation service 102 provides the service in the following manner.
·A Bot user BU who may use a CS(A) is paid out from an ID (A) in the trust mediation service 102. The trust mediation service 102 controls reading and writing of the document information d(X) and an access right to another user through the BU. ·The trust mediation service 102 holds an RID(A) associating user information of the ID(A) with user information TID(A) managed in the trust mediation service 102, and cooperates with the ID(A). ·For each user registered in the TID(A), the trust mediation service 102 has a signature key store ES(A) for an electronic signature. ·At the local 104, when the user X forwards the document information d(X) by using a forward route WR(X) with a WF(A), the user X converts, with a function of the WF(A), the document information d(X) into workflow information TWR(X) interpretable by the trust mediation service 102 and transmits the workflow information TWR(X) to the trust mediation service 102. The transmitted TWR(X) is managed by a workflow store WFDB(A) in the trust mediation service 102. ·In the trust mediation service 102, at the same time as the registration of the TWR(X), the d(X) is downloaded to the trust mediation service 102, and is uploaded to the CS(A) after assigning an electronic signature e(X) thereto, and the d(X) is overwritten. ·When a user (X') accesses the d(X) in the CS(A), the information of the ID(A) acquired by a browser plug-in BP is transmitted to the trust mediation service 102, and the information of the ID(A) is collated with information of the RID(A). From the forwarding state of the TWR(X) managed by the WFDB(A), in a case where the user matches a user to be processed next, an approval/rejection screen is displayed on a browser by the BP. ·When the user (X') approves, the trust mediation service 102 downloads the d(X), assigns an electronic signature e(X') thereto, and then uploads to the CS(A) to overwrite the d(X). ·WR(X) inquires of the trust mediation service 102 whether the forwarding state of the TWR(X) has been switched to a next approver, and synchronizes the forwarding states of the WR(X) and the TWR(X) by causing the WR(X) to proceed to next processing by using the switching as a trigger.

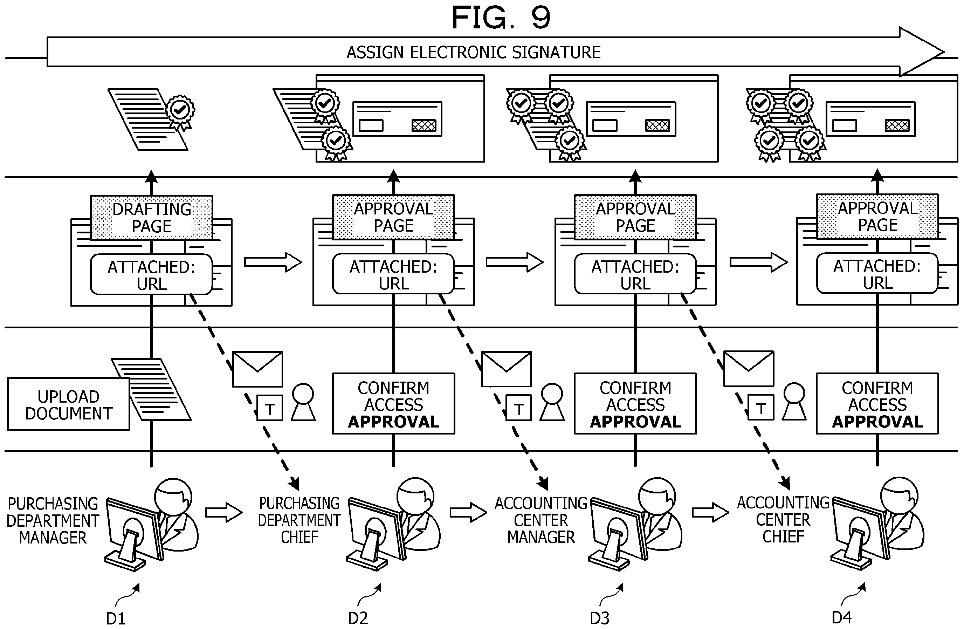

FIG. 9 is an explanatory diagram for describing the document forwarding in the trust mediation service. As illustrated in FIG. 9, the trust mediation service 102 assigns an electronic signature when forwarding document information between departments of a purchasing department manager D1, a purchasing department chief D2, an accounting center manager D3, and an accounting center chief D4 by the above-described service. By calling the WF information from this electronic signature in the trust mediation service 102, the authenticity and the forwarding history may be verified even when the document information is stored in any storage in the organization.

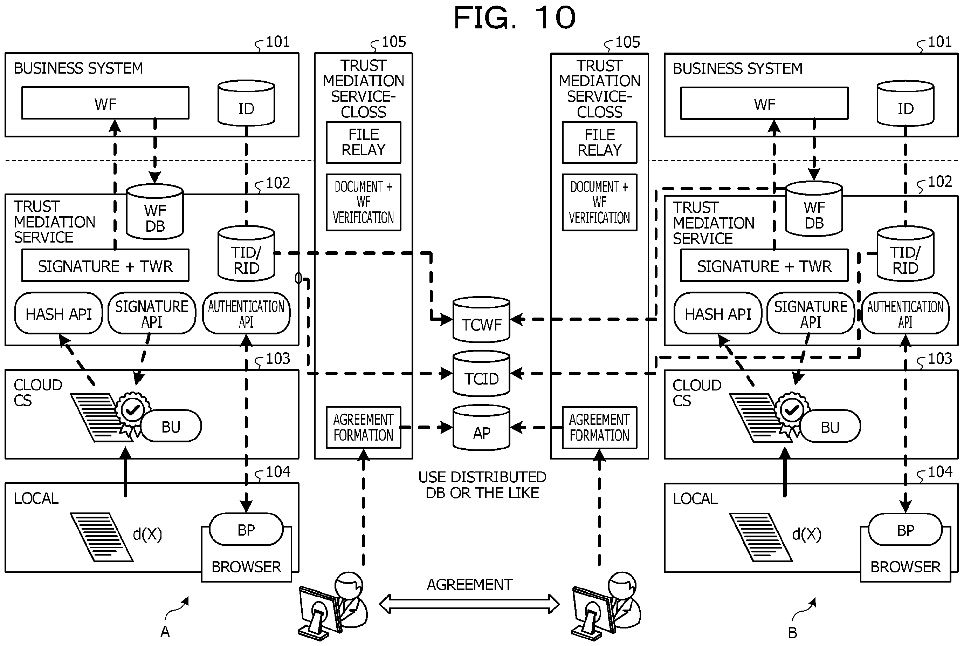

FIG. 10 is an explanatory diagram for describing a trust mediation service-CLOSS. As illustrated in FIG. 10, a trust mediation service-CLOSS 105 provides a service for cryptographically guaranteeing the authenticity and the forwarding history of the document information (d(X)) between the organization (A) and an organization (B).

For example, the organization (A) and the organization (B) each including the business system 101, the trust mediation service 102, the cloud CS 103, and the local 104 are coupled via the trust mediation service-CLOSS 105. In the trust mediation service-CLOSS 105, based on an agreement between individual users belonging to the organization (A) and the organization (B), a user (X) of the organization (A) forwards document information (d(X)) with a WF(A). Accordingly, the document d(X) stored in the cloud CS 103(A) is transferred to an area managed by a user (Y) of a cloud CS 103(B) of the organization (B). As described above, the trust mediation service-CLOSS 105 is a system that shares information (user information and WF information) for enabling the d(X) of which the process and the authenticity are guaranteed by the trust mediation service 102 of the organization (A) to be verified by the trust mediation service 102 of the organization (B).

For example, the trust mediation service-CLOSS 105 provides the following service.
·The trust mediation service-CLOSS 105 may have a TCID in which a domain of the trust mediation service 102 and ID information TID are associated with each other, and refer to the ID information between organizations. ·The trust mediation service-CLOSS 105 has a TCWF in which domain information of the trust mediation service 102 and TWR information are associated with each other, and enables the TWR information to be retrieved via the trust mediation service 102. ·The trust mediation service-CLOSS 105 has an API for registering that an agreement on a TWR(A) to be passed by a transmission source of the document d(X) exchanged between users of the organization (A) and the organization (B) or between the organizations has obtained, and has an agreement information store AP. ·The trust mediation service-CLOSS 105 has a verifying function of cryptographically verifying the TWR(A) associated with the d(X) when a transfer request for the d(X) is received from the organization (A), and verifying that there is an agreement in the AP. ·The trust mediation service-CLOSS 105 has a transfer function of storing the d(X) in the cloud CS 103 of the organization (B) via the trust mediation service 102 of the organization (B), for example, when the transfer is permitted as a result of the verification. ·The trust mediation service-CLOSS 105 has an agreement for coupling the TWR(A) to be processed by the transmission source of the document d(X) exchanged between the users of the organizations (A) and (B) or the organizations and a TWR continuously processed by the organization, an API for registering the agreement, and an AP for holding the agreement information. ·The trust mediation service-CLOSS 105 verifies the TWR(A) based on the agreement information described above, and in a case where the transfer is permitted as a result of the verification, stores the document d(X) in the cloud CS 103 via the trust mediation service 102 of the organization (B), and starts a WR(B) associated with a TWR(B) via the trust mediation service 102 of the organization (B).

By using the trust mediation service described above, when the document information is forwarded between the users of the organizations, it is possible to assign various attributes such as a creator, a time stamp, a processing content, and the like to the document information based on the mutual agreement content and then electronically sign the document information. As described above, the rule formation support apparatus 1 may be applied to rule creation for presenting an attribute assigned when the document information is forwarded between departments or between organizations.

For example, the rule formation support apparatus 1 collects history data related to attributes (marks) assigned when a user forwards document information in each organization, and creates and updates the model 30 based on the collected history data. For example, based on the collected history data, the rule formation support apparatus 1 creates the model 30 that stochastically determines the attribute assigned to the document information in each state of which organization and department the document information is forwarded from.

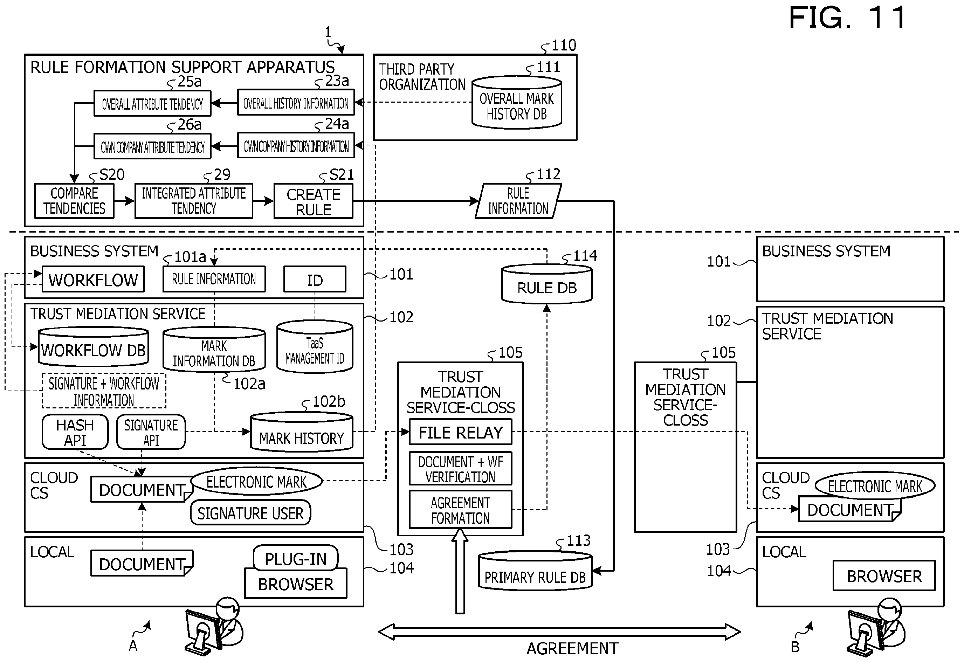

FIG. 11 is a block diagram illustrating an application example of the rule formation support apparatus 1 according to the embodiment. In a case illustrated in FIG. 11, the rule formation support apparatus 1 is applied to a service for forwarding the document information (d(X)) between the organization (A) and the organization (B) by using the trust mediation service-CLOSS 105.

For example, the rule formation support apparatus 1 collects a mark history 102b as own company history information 24a from a mark information database (DB) 102a that stores the history of the attributes (marks) assigned when the user forwards the document information. The own company history information 24a is data corresponding to the individual history 24 described above.

The rule formation support apparatus 1 collects overall history information 23a from an overall mark history DB 111 of a third party organization 110 that manages the mark history of all users. The overall history information 23a is data corresponding to the overall history 23 described above.

The history analysis unit 12 of the rule formation support apparatus 1 creates an overall attribute tendency (overall mark attribute tendency) 25a based on the overall history information 23a. The overall attribute tendency 25a is data corresponding to the general tendency data 25 described above. The history analysis unit 12 of the rule formation support apparatus 1 creates an own company attribute tendency (individual company mark attribute tendency) 26a based on the own company history information 24a. The own company attribute tendency 26a is data corresponding to the general tendency data (individual) 26 described above.

The history comparison unit 13 of the rule formation support apparatus 1 performs tendency comparison between the overall attribute tendency 25a and the own company attribute tendency 26a, and generates an integrated attribute tendency 29 obtained by integrating the overall attribute tendency 25a and the own company attribute tendency 26a (S20). The generation of the integrated attribute tendency 29 by the tendency comparison is similar to the generation of the model creation data 28 by the general and individual tendency comparison described above. For example, the integrated attribute tendency 29 is data corresponding to the model creation data 28 described above.

Based on the integrated attribute tendency 29, the model creation and update unit 15 of the rule formation support apparatus 1 creates and updates the model 30, for example, creates a rule (S21). Information related to the model 30 created and updated by the model creation and update unit 15, for example, an incentive value of an attribute presented in each state or the like, is stored in a primary rule DB 113 as rule information 112.

The trust mediation service-CLOSS 105 presents the attribute based on the rule information 112 stored in the primary rule DB 113 when the user of each organization performs agreement formation on the attribute assigned when the user forwards document information. As described above, by presenting the attribute based on the rule information 112, the trust mediation service-CLOSS 105 may present the attribute reflecting the characteristics of the user and using the overall tendency.

Rule information 101a indicating a rule (an attribute assigned when document information is forwarded) by the agreement formation is stored in a rule DB 114. By referring to the rule information 101a stored in the rule DB 114, the business system 101 specifies the attribute assigned when the document information is forwarded.

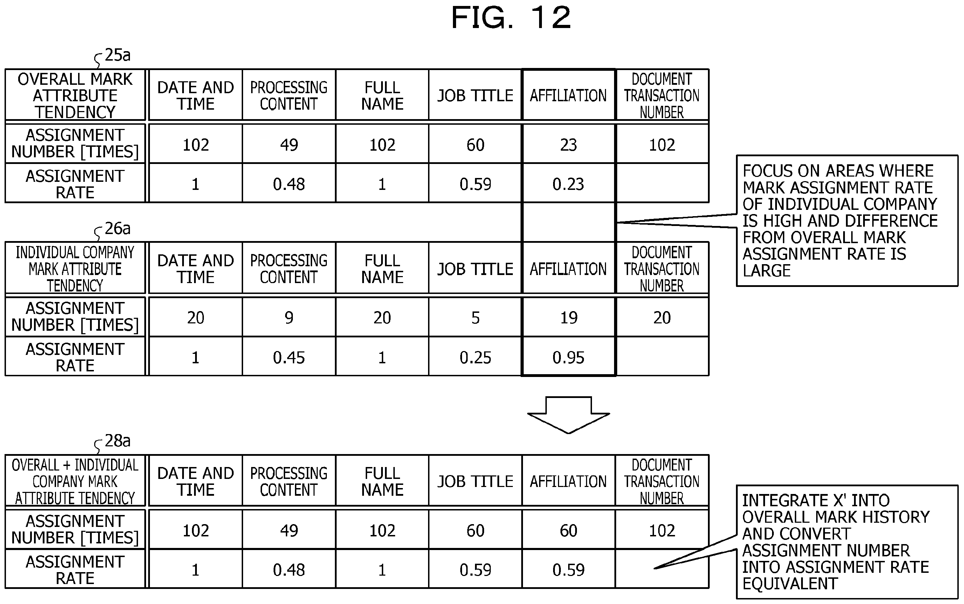

FIG. 12 is an explanatory diagram illustrating an example of integration of attribute tendencies. As illustrated in FIG. 12, the history comparison unit 13 compares the overall attribute tendency 25a with the individual company attribute tendency (own company attribute tendency) 26a, and then integrates the overall attribute tendency 25a and the individual company attribute tendency 26a and generates the tendency data (overall + individual company mark attribute tendency) 28a within a specific range after comparison. For example, the history comparison unit 13 uses the individual company attribute tendency 26a to correct a value of an attribute having a difference equal to or greater than a predetermined value in a selection frequency when the overall attribute tendency 25a and the individual company attribute tendency 26a are compared with each other such that the individual company tendency appears largely, and generates the tendency data 28a within the specific range after comparison.

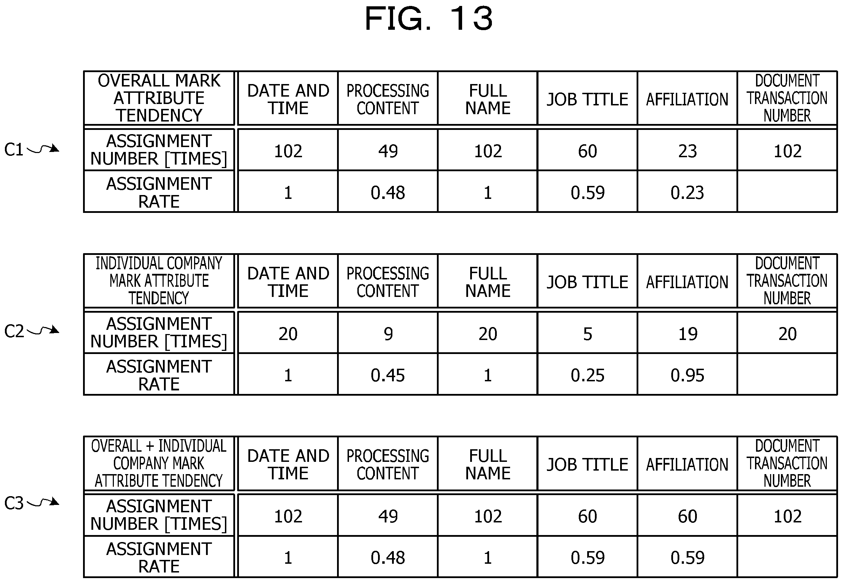

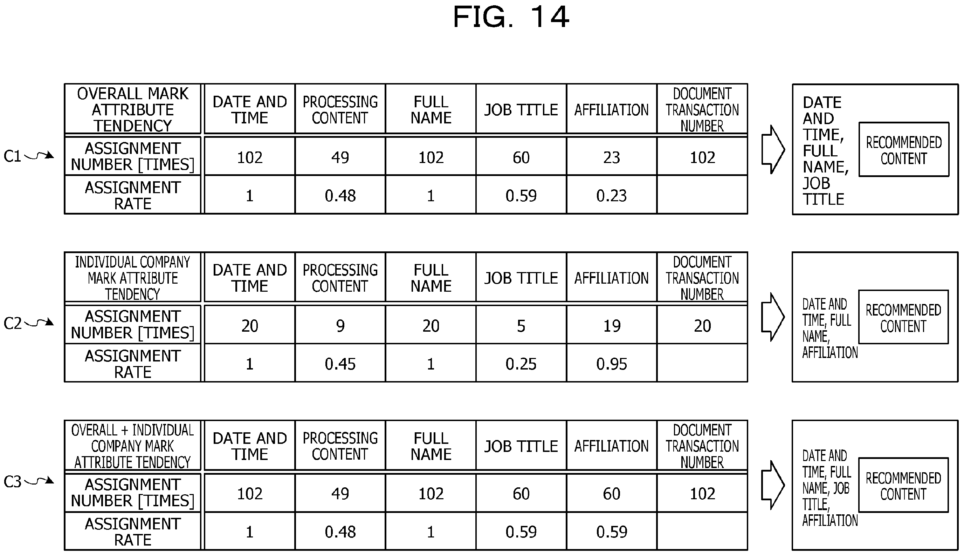

FIGs. 13 and 14 are explanatory diagrams illustrating specific examples of the attribute tendencies. As illustrated in FIG. 13, a case C1 indicates the overall attribute tendency. In the case C1, a date and time, a full name, a job title, and the like with a large assignment rate are recommended, but an affiliation that is characteristic to the individual company has a lowest assignment rate and is not recommended.

A case C2 indicates an attribute tendency of the individual company. In the case C2, when the history of the individual company is used, it is possible to analyze a tendency of what kind of history is selected in the individual company. However, in the case C2, it is difficult to read the tendency of the industry and a portion characteristic to the individual company.

A case C3 indicates an attribute tendency in which the overall and individual company attribute tendencies are integrated. In the case C3, there is no difference between the assignment rate of the affiliation that is an attribute characteristic to the individual company and the assignment rate of the job title that is used as a mark in the entire industry, and thus it is possible to perform an attribute recommendation in consideration of both the individual company and the entire industry attribute tendencies.

FIG. 14 illustrates a case where attributes having an assignment rate Xᵢ (i ∈ {date and time, processing content, full name, job title, affiliation}) > 0.5 are recommended for each of the cases C1, C2, and C3. For the case C1, the recommended attributes are the date and time, the full name, and the job title. For the case C2, the recommended attributes are the date and time, the full name, and the affiliation. For the case C3, the recommended attributes are the date and time, the full name, the job title, and the affiliation.

As described above, the rule formation support apparatus 1 acquires, based on history information (the overall history 23 and the individual history 24) of transactions by each user, the general tendency data 25 indicating a selection frequency of each attribute in the transactions by general users and the individual tendency data 27 indicating a selection frequency of each attribute in the transactions by a specific target user. The rule formation support apparatus 1 specifies an attribute having a difference equal to or greater than a predetermined value in the selection frequency of each attribute by comparing the general tendency data 25 with the individual tendency data 27. The rule formation support apparatus 1 integrates the general tendency data 25 and the individual tendency data 27 and creates the model creation data 28 used for creating or updating the model 30 corresponding to the rule of the attribute presented to the target user. At the time of creating the model creation data 28, the rule formation support apparatus 1 performs integration by using the individual tendency data 27 for the attribute specified as the attribute having the difference. As a result, the rule formation support apparatus 1 may create a rule reflecting the selection tendency of the attribute in the target user.

The rule formation support apparatus 1 compares a value obtained by normalizing the selection frequency of each attribute in the general tendency data 25 with a value obtained by normalizing the selection frequency of each attribute in the individual tendency data 27, and specifies an attribute having a difference equal to or greater than a predetermined value between the normalized values. By comparing the pieces of data normalized in this manner, the rule formation support apparatus 1 may compare tendencies of the selection frequencies regardless of the magnitude of the number of selections of each attribute.

The history information used for forming a rule by the rule formation support apparatus 1 is information included in the overall mark history DB 111 and the mark history 102b managed by the system of the target user, and indicates a history of attributes (marks) assigned to the document information forwarded between the users. Based on the history information, the rule formation support apparatus 1 creates data used for creating or updating the model corresponding to the rule for presenting the attribute assigned when the target user forwards the document information. Accordingly, the rule formation support apparatus 1 may support the rule creation for presenting the attribute assigned when the target user forwards the document information.

Each constituent element of each apparatus illustrated in the drawings does not have to be physically configured as illustrated in the drawings. For example, the specific form of the distribution and integration of each apparatus is not limited to the illustrated form, and all or a part of the apparatus may be configured in arbitrary units in a functionally or physically distributed or integrated manner depending on various types of loads, usage statuses, and the like.

All or arbitrary part of the various processing functions of the determination tendency attribute extraction unit 11, the history analysis unit 12, the history comparison unit 13, the individual tendency range specification unit 14, and the model creation and update unit 15 in the rule formation support apparatus 1 may be executed over a central processing unit (CPU) (or a microcomputer such as a microprocessor unit (MPU) or a micro controller unit (MCU)). It goes without saying that all or arbitrary part of the various processing functions may be executed over a program analyzed and executed by a CPU (or a microcomputer, such as an MPU or MCU) or hardware by wired logic. The various processing functions performed by the rule formation support apparatus 1 may be executed by cloud computing in which a plurality of computers cooperate with each other.

The various kinds of processing described in the above embodiment may be implemented by a computer executing a program prepared in advance. Hereinafter, an example of a (hardware) configuration of a computer that executes a program having the functions similar to those of the above embodiment will be described. FIG. 15 is an explanatory diagram for describing an example of a configuration of a computer.

As illustrated in FIG. 15, a computer 200 includes a CPU 201 that executes various types of arithmetic processing, an input apparatus 202 that receives data input, a monitor 203, and a speaker 204. The computer 200 includes a medium reading apparatus 205 that reads a program or the like from a storage medium, an interface apparatus 206 for coupling to various types of apparatuses, and a communication apparatus 207 for communication with and coupling to an external device in a wired or wireless manner. The computer 200 includes a random-access memory (RAM) 208 for temporarily storing various types of information, and a hard disk apparatus 209. The components (201 to 209) in the computer 200 are coupled to a bus 210.

A program 211 for executing various types of processing in the functional configuration (for example, the determination tendency attribute extraction unit 11, the history analysis unit 12, the history comparison unit 13, the individual tendency range specification unit 14, and the model creation and update unit 15) described in the above embodiment is stored in the hard disk apparatus 209. The hard disk apparatus 209 stores various types of data 212 to be referred to by the program 211. The input apparatus 202 receives, for example, inputs of operation information from an operator. The monitor 203 displays, for example, various types of screens to be operated by the operator. For example, a printer or the like is coupled to the interface apparatus 206. The communication apparatus 207 is coupled to a communication network such as a local area network (LAN), and exchanges various types of information with an external device via the communication network.

The CPU 201 reads the program 211 stored in the hard disk apparatus 209, loads the program 211 into the RAM 208, and executes the program 211 to perform various types of processing related to the functional configuration described above (for example, the determination tendency attribute extraction unit 11, the history analysis unit 12, the history comparison unit 13, the individual tendency range specification unit 14, and the model creation and update unit 15). The program 211 does not have to be stored in the hard disk apparatus 209. For example, the program 211 stored in a storage medium readable by the computer 200 may be read and executed. For example, the storage medium readable by the computer 200 corresponds to a portable storage medium such as a compact disc read-only memory (CD-ROM), a Digital Versatile Disc (DVD), or a Universal Serial Bus (USB) memory, a semiconductor memory such as a flash memory, a hard disk drive, or the like. The program 211 may be stored in an apparatus coupled to a public network, the Internet, a LAN, or the like, and the computer 200 may read the program 211 from the apparatus and execute the program 211.

## Claims

1. A rule formation support program causing a computer to execute a process, the process comprising:
obtaining, based on history information of transactions by each user, a first tendency that indicates a selection frequency of each attribute in the transactions by a plurality of users and a second tendency that indicates a selection frequency of each attribute in the transactions by a predetermined target user;
specifying an attribute that includes a difference equal to or greater than a predetermined value in the selection frequency of each attribute by comparing the first tendency and the second tendency; and
when generating data to be used for one of creating and updating a model that corresponds to a rule of an attribute presented to the target user by integrating the first tendency and the second tendency, performing integration by using the second tendency for the specified attribute.

2. The rule formation support program according to claim 1,
wherein, in the specifying, a value obtained by normalizing the selection frequency of each attribute in the first tendency is compared with a value obtained by normalizing the selection frequency of each attribute in the second tendency, and the attribute that includes a difference equal to or greater than a predetermined value between the normalized values is specified.

3. The rule formation support program according to claim 1,
wherein the history information indicates a history of attributes assigned to document information forwarded between users, and
wherein, in the performing integration, data to be used for one of creating and updating a model that corresponds to a rule for presenting an attribute assigned when the target user forwards the document information is generated.

4. A rule formation support method causing a computer to execute a process, the process comprising:
obtaining, based on history information of transactions by each user, a first tendency that indicates a selection frequency of each attribute in the transactions by a plurality of users and a second tendency that indicates a selection frequency of each attribute in the transactions by a predetermined target user;
specifying an attribute that includes a difference equal to or greater than a predetermined value in the selection frequency of each attribute by comparing the first tendency and the second tendency; and
when generating data to be used for one of creating and updating a model that corresponds to a rule of an attribute presented to the target user by integrating the first tendency and the second tendency, performing integration by using the second tendency for the specified attribute.

5. The rule formation support method according to claim 4,
wherein, in the specifying, a value obtained by normalizing the selection frequency of each attribute in the first tendency is compared with a value obtained by normalizing the selection frequency of each attribute in the second tendency, and the attribute that includes a difference equal to or greater than a predetermined value between the normalized values is specified.

6. The rule formation support method according to claim 4,
wherein the history information indicates a history of attributes assigned to document information forwarded between users, and
wherein, in the performing integration, data to be used for one of creating and updating a model that corresponds to a rule for presenting an attribute assigned when the target user forwards the document information is generated.

7. A rule formation support apparatus comprising:
a processor configured to:
obtain, based on history information of transactions by each user, a first tendency that indicates a selection frequency of each attribute in the transactions by a plurality of users and a second tendency that indicates a selection frequency of each attribute in the transactions by a predetermined target user;
specify an attribute that includes a difference equal to or greater than a predetermined value in the selection frequency of each attribute by comparing the first tendency and the second tendency; and
when generating data to be used for one of creating and updating a model that corresponds to a rule of an attribute presented to the target user by integrating the first tendency and the second tendency, perform integration by using the second tendency for the specified attribute.

8. The rule formation support apparatus according to claim 7,
wherein the processor is configured to
compare a value obtained by normalizing the selection frequency of each attribute in the first tendency with a value obtained by normalizing the selection frequency of each attribute in the second tendency, and
specify the attribute that includes a difference equal to or greater than a predetermined value between the normalized values.

9. The rule formation support apparatus according to claim 7,
wherein the history information indicates a history of attributes assigned to document information forwarded between users, and
wherein the processor is configured to generate data to be used for one of creating and updating a model that corresponds to a rule for presenting an attribute assigned when the target user forwards the document information.
